# EUROPEAN PATENT SPECIFICATION

(11) **EP 3 133 470 B1**
(45) Date of publication and mention of the grant of the patent: **13.03.2019**
(21) Application number: 16184487.3
(22) Date of filing: 17.08.2016
(51) Int. Cl.: G06F 3/01, H04M 1/725, G01C 21/20

(54) **ELECTRONIC SYSTEM, PORTABLE DISPLAY DEVICE AND GUIDING DEVICE**
ELEKTRONISCHES SYSTEM, TRAGBARE ANZEIGEVORRICHTUNG UND FÜHRUNGSVORRICHTUNG
SYSTÈME ÉLECTRONIQUE, DISPOSITIF D'AFFICHAGE PORTABLE ET DISPOSITIF DE GUIDAGE

(30) Priority: 19.08.2015 US 201562206856 P
(43) Date of publication of application: 22.02.2017
(73) Proprietor: HTC Corporation, Taoyuan City 330 (TW)
(72) Inventor: Yang, Feng-Kai, 114 Taipei City (TW); Lu, Shih-Chen, 330 Taoyuan City (TW)
(74) Representative: Murgitroyd & Company

(56) References cited:
- US-A1- 2013 253 824

## Description

### Background of the Invention

### 1. Field of the Invention

The present invention relates to an electronic system, a portable display device and a guiding device, and more particularly, to an electronic system, a portable display device and a guiding device capable of facilitating real-time interaction between electronic devices.

### 2. Description of the Prior Art

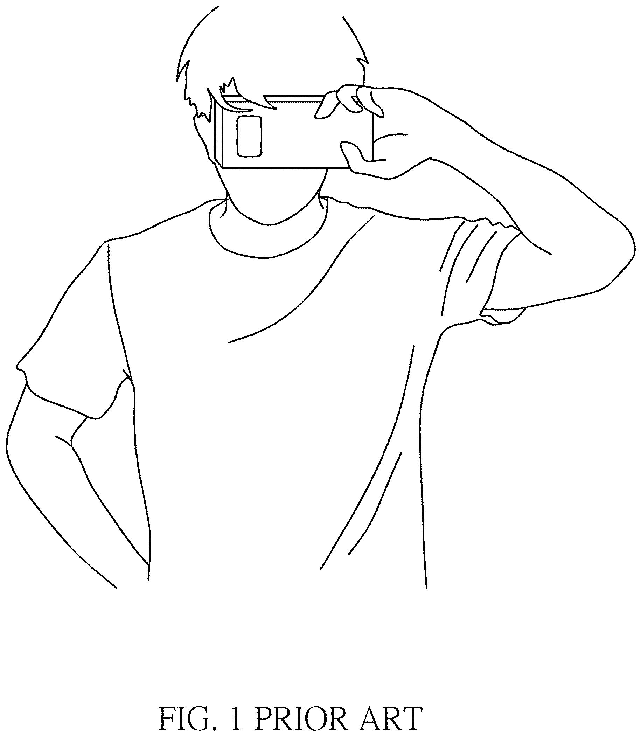

A head-mounted display (HMD) is a type of display device, worn on the head, which displays image near the user's eyes. For example, please refer to FIG. 1.

A user wears the HMD displaying three-dimensional (3D) (or non-3D) images or other computer generated content for virtual reality experience. However, when the user uses the HMD, other people don't know what the user is watching, so the other people cannot interactive or give any guidance or recommendation for the user.

US 2013/0253824 A1 may be regarded as background art useful for understanding the invention.

### Summary of the Invention

It is therefore an objective of the present invention to provide an electronic system, a portable display device and a guiding device capable of facilitating real-time interaction between electronic devices, according to the appended independent claims, to solve the problems in the prior art.

An electronic system is disclosed; comprising: a portable display device, comprising: a first display unit for displaying images of scenes according to a field of view; a control unit for generating information of a current viewing area of one of the images to be displayed on the first display unit; and a first communication unit for outputting the information of the current viewing area; and a guiding device, comprising: a second communication unit for receiving the information of the current viewing area from the portable display device; and a processing unit for generating guidance information according to the information of the current viewing area; wherein the second communication unit transmits the guidance information to the first communication unit, and accordingly the control unit performs a guidance task according to the guidance information.

A portable display device is disclosed; comprising: a display unit for displaying images of scenes according to a field of view; a control unit for generating information of a current viewing area of one of the images to be displayed by the first display unit; and a communication unit for transmitting the information of the current viewing area to a guiding device.

A guiding device is disclosed; comprising: a communication unit for receiving information of a current viewing area of an image to be displayed by the portable display device; and a processing unit for generating guidance information associated with a guidance task according to the information of the current viewing area of the image; wherein the communication unit transmits the guidance information to the portable display device for guiding the portable display device to perform the guidance task.
These and other objectives of the present invention will no doubt become obvious to those of ordinary skill in the art after reading the following detailed description of the preferred embodiment that is illustrated in the various figures and drawings.

### Brief Description of the Drawings

FIG. 1 is a schematic diagram illustrating a head-mounted display being worn the head of a user according to the prior art.
FIG. 2 is a schematic diagram of an electronic system according to an exemplary embodiment of the present invention.
FIG. 3 is a schematic diagram illustrating a user's view in a display unit of a portable display device according to an exemplary embodiment of the present invention.
FIG. 4 is a schematic diagram illustrating a user's view in a display unit of a guiding device according to an exemplary embodiment of the present invention.
FIG. 5 is a schematic diagram illustrating a user's view in a display unit of a portable display device during a guiding process according to an exemplary embodiment of the present invention.
FIG. 6 is a schematic diagram illustrating a user's view in a display unit of a guiding device during a guiding process according to an exemplary embodiment of the present invention.
FIG. 7 is a schematic diagram illustrating a user's view in a display unit of a portable display device during a guiding process according to an alternative exemplary embodiment of the present invention.
FIG. 8 is a schematic diagram illustrating a user's view in a display unit of a guiding device while using a real estate application software according to an exemplary embodiment of the present invention.

### Detailed Description

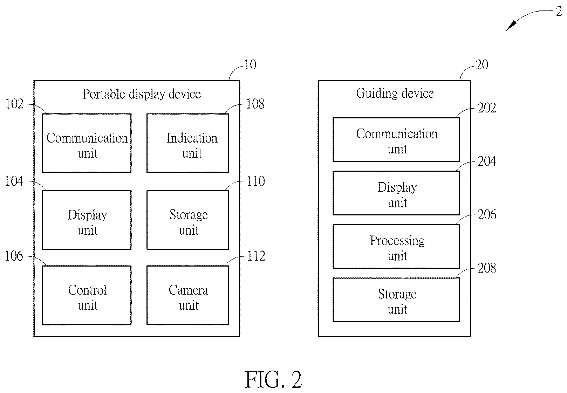

Please refer to FIG. 2, which is a schematic diagram of an electronic system 2 according to an exemplary embodiment of the present invention. As shown in FIG .2, the electronic system 2 includes a portable display device 10 and a guiding device 20. The electronic system 2 may be applied for exhibition guidance, education purpose, virtual tour navigation and shopping guidance, and this should not be a limitation of the present invention. The portable display device 10 may be a head-mounted display (HMD) device, a wearable electronic device or other electronic device with a display function, and this should not be a limitation of the present invention. The guiding device 20 may be a smart phone, a personal digital assistant (PDA), a notebook or a tablet PC, and this should not be a limitation of the present invention.

The portable display device 10 includes a communication unit 102, a display unit 104, a control unit 106, an indication unit 108 and a storage unit 110. The guiding device 20 includes a communication unit 202, a display unit 204, a processing unit 206 and a storage unit 208. The communication unit 102 and the communication unit 202 may communicate with each other via a wireless or wired connection. For example, the communication unit 102 may be synced and/or paired with the communication unit 202 via a wireless communication technology, such as Bluetooth, near field communication (NFC), Wi-Fi or any other wireless communication technology. The display unit 104 is utilized for successively displaying images of scenes according to a field of view (FOV) of a user. The control unit 106 is utilized for generating information of a current viewing area of one of the images of the scenes. For example, the control unit 106 generates the information of a current viewing area of an image currently displayed on the display unit 104. The information of the current viewing area of the image may be related to at least one of a current field of view of the user using the portable display device 10, a current FOV of the display unit 104, a visible area of the image according to the user's current head position and the user's fine focus FOV. The information of the current viewing area of the image may also be related to inertial measurement unit (IMU) data or other usage data (e.g. velocity, orientation, and gravitational forces) associated with the portable display device 10. The information of the current viewing area of the image may represent what the user is watching via the display unit 104. The information of the current viewing area can be transmitted to the communication unit 202 by the communication unit 102. The communication unit 202 is utilized for receiving the information of the current viewing area of the image from the portable display device 10. The processing unit 206 is utilized for generating guidance information according to the information of the current viewing area of the image. The guidance information can be provided to the portable display device 10 for guiding the portable display device 10 to perform a guidance task.

Further description associated with operations of the electronic system 2 follows. In an embodiment, a user A (called a pilot user) utilizes the portable display device 10 to experience a view of a virtual environment. A user B (co-pilot user) utilizes the guiding device 20 to experience a bigger or more comprehensive view and gives guidance or recommendations to the user A. For example, the portable display device 10 may be an HMD. Both the storage unit 110 of the portable display device 10 and the storage unit 208 of the guiding device 20 may obtain and store images. That is, the storage unit 208 of the guiding device 20 stores the same images that are stored by the storage unit 110 of the portable display device 10. In more detail, if an image IMG is originally stored in a cloud server, the portable display device 10 and the guiding device 20 can get the image IMG from the cloud server, respectively. If an image IMG is originally stored in the portable display device 10, the guiding device 20 can get the image IMG from the portable display device 10. If an image IMG is stored in the guiding device 20, the portable display device 10 can get the image IMG from the guiding device 20. In other words, both of the portable display device 10 and the guiding device 20 store the same image at first.

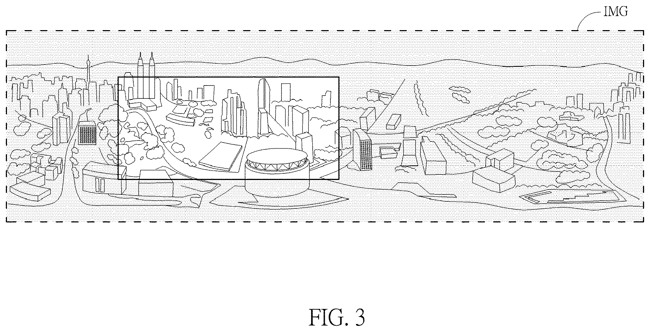

The image IMG may be a wide-angle image, a panoramic image, a photograph image or a real-time computer generated image for displaying. The portable display device 10 can be worn on the user A's head. The display unit 104 may display the image IMG according to a field of view of the user A. For example, the display unit 104 may display a visible area of the image IMG according to the user A's current head position during a virtual reality (VR) view period. As shown in FIG. 3, the user A can see a specific view area (i.e. a current viewing area) of the image IMG on the display unit 104. The current viewing area may correspond to the user A's current head position. Therefore, the portable display device 10 can provide information of a current viewing area of the image IMG to the guiding device 20, so as to inform the guiding device 20 of what the user A wearing the portable display device 10 is watching via the display unit 104.

Since the storage unit 208 of the guiding device 20 stores the same images that are stored by the storage unit 110, the display unit 204 of the guiding device 20 can display the images of the scenes for the user B. For example, the display unit 204 of the guiding device 20 can display a first viewing area of the images for the user B. As such, the user B can see a specific view area (i.e. a first viewing area) of the images on the display unit 204. In an embodiment, the first viewing area of the images to be displayed on the display unit 204 may be greater than the current viewing area of one image to be displayed on the display unit 104.

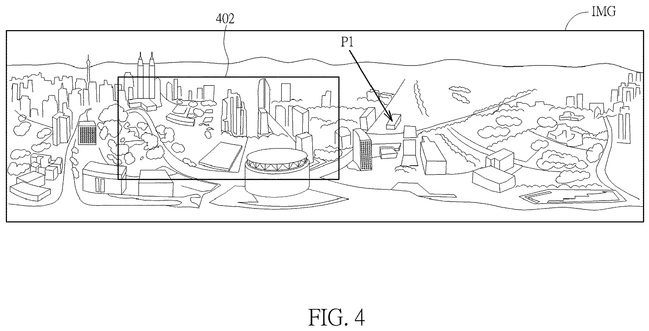

For example, the display unit 204 of the guiding device 20 may display the entire field of view of the image IMG for the user B. As shown in FIG. 4, the image IMG is a wide-angle image, and the user B may see an entire area of the image IMG. That is, the first viewing area of the image IMG to be displayed on the display unit 204 is the entire area of the image IMG. As such, the user B can view full environment of the scene. The user B can give guidance or recommendations to the user A to take some actions since the user A wearing the portable display device 10 is watching the current viewing area shown in FIG. 3 of the image IMG. In more detail, the communication unit 202 may sync and pair with the communication unit 102 at first. The processing unit 206 can request the portable display device 10 to reply current situation via the communication unit 202. After that, the communication unit 202 receives the information of a current viewing area of the image IMG from the communication unit 102 of the portable display device 10. According to the information of the current viewing area of the image IMG, the guiding device 20 can know what the user A is watching. Accordingly, the guiding device 20 can generate guidance information according to the information of the current viewing area of the image for guiding the portable display device 10 to perform a guidance task.

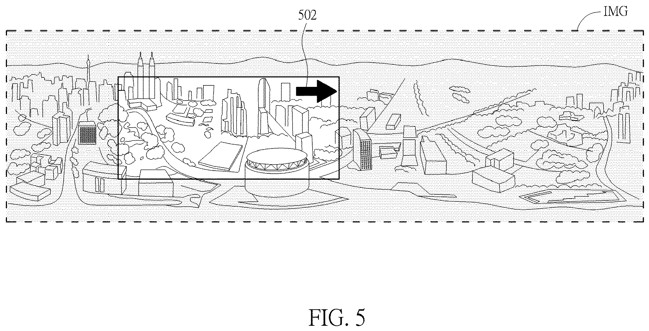

In an embodiment, please further refer to FIG. 4. As shown on Fig. 4, the processing unit 206 creates a highlight indicator 402 with a rectangle-shaped box line to represent the current viewing area of the portable display device 10. That is, the area enclosed in the highlight indicator 402 shown in FIG. 4 is the same as the current viewing area shown in FIG. 3. Therefore, the user B can know what the user A is watching. Moreover, if the user B wants to guide the user A to turn his head right to look at a target position P1 of the image IMG, i.e., the guidance task is turning head right to look at the target position P1. The processing unit 206 generates the guidance information including a guiding command associated with the guidance task. The guiding command may include guiding to turn head right to look at the target position P1. The communication unit 202 transmits the guidance information to the communication unit 102. Accordingly, the control unit 106 obtains the guidance information from the communication unit 102 and performs the guidance task according to the guidance information. For example, the control unit 106 can control the display unit 104 to display additional information for advising the user A to turn his head right, so as to realize the guidance task. As shown in FIG. 5, the display unit 104 displays a direction arrow indicator 502. When the user A sees the direction arrow indicator 502, the user A would turn his head towards the right to watch the target position P1. Moreover, the direction arrow indicator 502 may flash in different manner for attracting user A's attention.

In addition, the control unit 106 can control the indication unit 108 to implement an indication function for informing the user A. The indication unit 108 may be a light device, a speaker or a vibration device, for informing the user A through light, sound, vibration or other indication signal, so as to realize the guidance task. For example, the indication unit 108 outputs a voice signal to say the phrase "turn your head right to watch".

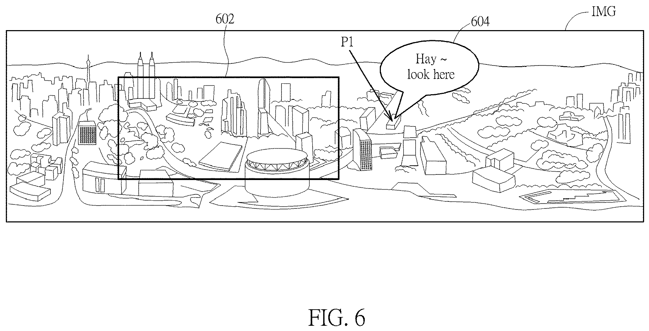

In an embodiment, after obtaining the information of the current viewing area of the image IMG from the portable display device 10, the guiding device 20 may edit the image IMG stored in the storage unit 208. For example, as shown in FIG. 6, a highlight indicator 602 with a rectangle-shaped box line is created by the processing unit 206 for representing the current viewing area of the portable display device 10. In such a situation, the user B can know what the user A is watching. Moreover, if the user B wants to guide the user A to turn his head right to look at a target position P1 of the image IMG, i.e., the guidance task is turning head right to look at the target position P1 of the image IMG. The guiding device 20 can add an object on a coordinate location of the image IMG. For example, the guiding device 20 can add icons (e.g., anchor icon, a point icon), symbols, texts on the image IMG, so as to generate an edited image IMG'. For example, an annotation dialog box 604 including the words "Hay ∼ look here" on the target position P1 of the image IMG is created by the processing unit 206. Further, the edited image IMG' and/or information related to the edited image IMG' may be included in the guidance information transmitted to the portable display device 10.

Further, the processing unit 206 may generate the guidance information including information related to information related to the edited image IMG' and a guiding command (or generate the guidance information including the edited image IMG' and the guiding command). The information related to the edited image IMG' may include indications of adding an annotation dialog box including the words "Hay ∼ look here" on the target position P1. The guiding command may include guiding to turn to look at the target position P1. The guidance information can be transmitted to the portable display device 10 by the communication unit 202.

In an embodiment, when the portable display device 10 receives the guidance information including the information related to the edited image IMG' and the guiding command (or including the edited image IMG' and the guiding command), the control unit 106 may edit the image IMG (or an image following the image IMG) originally stored in the storage unit 110 to generate an edited image IMG_1 according to the guidance information from the guiding device 20. According to the guidance information, the display unit 104 may append a annotation dialog box including the words "Hay ∼ look here" onto the target position P1 of the image IMG stored in the storage unit 110 to generate an edited image IMG_1. The display unit 104 may display the edited image IMG_1 according to the current FOV of the user A.

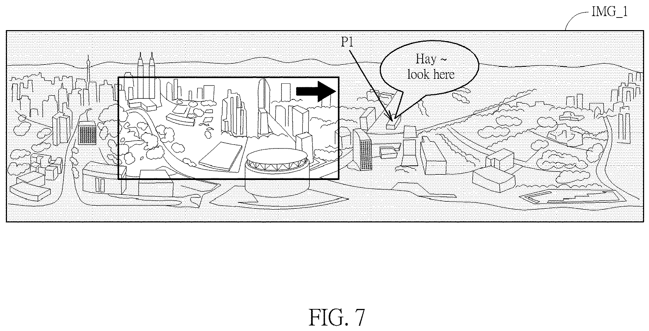

Moreover, the control unit 106 may compare the current FOV of the user A with the target position P1 of the added annotation dialog box, so as to generate a comparison result. According the comparison result, the control unit 106 generates an indication signal for guiding the user A to turn to look at the target position P1 of the edited image IMG_1. For example, when the comparison result represents the target position P1 is located outside the right side of the current FOV of the user A, the control unit 106 generates the indication signal so as to control the display unit 104 to display addition information for advising the user A to turn his head right. For example, as shown in FIG. 7, the display unit 104 may display a direction arrow on the current viewing area of the edited image IMG_1 for indicating the user A to turn his head right. When the user A sees the direction arrow, the user A would turn his head towards the right and see the annotation dialog box including the words "Hay ∼ look here" at the target position P1 of the edited image IMG_1. Similarly, the control unit 106 can also control the indication unit 108 to implement an indication function for advising the user A to turn his head right to watch the added annotation dialog box. In other words, when the user A is viewing the virtual reality image displayed on the display unit 104, the user B can utilize the guiding device 20 to provide guidance or recommendations to the user A. Therefore, the user B can real-time interact with the user A for giving some guidance or recommendations.

In an embodiment, when the portable display device 10 receives the guidance information including the information related to the edited image IMG' and the guiding command (or including the edited image IMG' and the guiding command), the control unit 106 may create a new image layer for drawing an annotation dialog box including the words "Hay ∼ look here" at the target position P1 according to the guidance information. The display unit 104 may display with multiple layers (e.g., original layer containing the image IMG (or an image following the image IMG), new added layer containing the annotation dialog box including the words "Hay ∼ look here" at the target position P1), so that the image IMG originally stored in the storage unit 110 may not be changed or damaged. Similarly, the control unit 106 generates an indication signal for guiding the user A to turn to look at the target position P1 of the image IMG (or an image following the image IMG).

In an embodiment, when the portable display device 10 receives the guidance information including the edited image IMG' and the guiding command), the image IMG (or an image following the image IMG) originally stored in the storage unit 110 may be replaced by the edited image IMG' edited by the guiding device 20. The control unit 106 may control the display unit 104 to display the edited image IMG' obtained from the guiding device 20. Similarly, the control unit 106 generates an indication signal for guiding the user A to turn to look at the target position P1 of the edited image IMG'.

In an embodiment, if the user B wants to guide the user A to turn to look at a target position P1 of the image IMG i.e., the guidance task is turning to look at the target position P1 of the image IMG. The processing unit 206 determines whether the target position P1 is in the current viewing area of the image IMG after obtaining the information of the current viewing area of the image IMG from the portable display device 10. If yes, the guiding device 20 need not provide guidance information for the portable display device 10. If no, this means that the display unit 104 does not display the target position P1 of the image IMG for the user A, and the user A does not watch the target position P1 of the image IMG on the display unit 104 now. The guiding device 20 may further provide guidance information for guiding the portable display device 10 to perform the corresponding guidance task.

In an embodiment, a consumer (called a pilot user) uses a real estate application software on the portable display device 10. A sales (called a co-pilot user) uses the same real estate application software on the guiding device 20. During a Non-co-pilot mode, when the consumer performs the real estate app on the portable display device 10 for viewing a living room of a house, the sales doesn't know what the customer is watching so cannot give any guidance or recommendation for the consumer.

During a co-pilot mode, the portable display device 10 can be synced and/or paired with the guiding device 20. Both the storage unit 110 of the portable display device 10 and the storage unit 208 of the guiding device 20 may store a wide-angle image. If the consumer is viewing a living room of a house on the wide-angle image via the display unit 104 of the portable display device 10, the portable display device 10 can provide information of the current viewing area (i.e. the area associated with the living room of the house) to the guiding device 20. After receiving the information of the current viewing area, area associated with the living room on the wide-angle image can be highlighted with a rectangle-shaped box line according to the information of the current viewing area. As such, the sales can know that the consumer is watching the living room of the house.

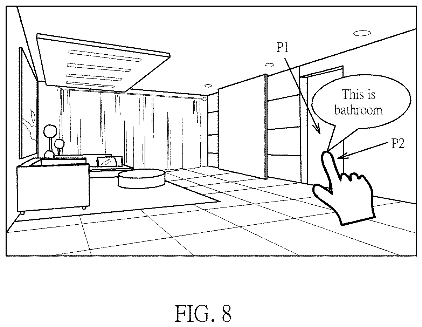

When the sales wants to guide the consumer to turn to view a bathroom, the sales makes a pointer with palm-shape on a target position P1 of the wide-angle image and creates an annotation dialog box including the words "This is bathroom" on a target position P2 of the wide-angle image via a user interface of the guiding device 20. As shown in FIG. 8, the guiding device 20 is able to draw the pointer with palm-shape on the target position P1 and draw the annotation dialog box including the words "This is bathroom" on the target position P2 of the wide-angle image, so as to generate an edited wide-angle image. The guiding device 20 transmits the edited wide-angle image to the portable display device 10. When the portable display device 10 receives the edited wide-angle image including the newly added pointer and annotation dialog box, the wide-angle image originally stored in the portable display device 10 may be replaced by the edited wide-angle image including the pointer and the annotation dialog box. Therefore, when the display unit 104 of the portable display device 10 displays the edited wide-angle image, the consumer will see the pointer and the annotation dialog box including the words "This is bathroom". In such a situation, the consumer can see the same image shown in FIG. 8. Therefore, the sales successfully guides the customer to see his/her chosen destination (e.g. bathroom).

On the other hand, please further refer to FIG. 2. As shown in FIG. 2, the portable display device 10 further includes a camera unit 112. The camera unit 112 is utilized for capturing auxiliary images associated with the environment of the portable display device 10. The auxiliary images may be 360-degree panoramic images. The auxiliary images can be transmitted to the guiding device 20 via the communication unit 102. Accordingly, the processing unit 206 may generate the guidance information according to the information of the current viewing area of the image and the auxiliary images captured by the camera unit 112. Therefore, the electronic system 2 can also be applied to an augmented reality (AR) application environment and a mixed reality (MR) application environment.

In summary, when a pilot user is viewing image displayed on the display unit of the portable display device, a co-pilot user can utilize the guiding device to provide guidance or recommendations to the pilot user for guiding the pilot user, so as to facilitate real-time interaction between the portable display device and the guiding device.
Those skilled in the art will readily observe that numerous modifications and alterations of the device and method may be made while retaining the teachings of the invention. Accordingly, the above disclosure should be construed as limited only by the appended claims.

## Claims

1. An electronic system, comprising:
a portable display device (10) of a user A, comprising:
a first display unit (104) for displaying images of scenes according to a field of view, FOV, of the user A;
a storage unit (110) for storing the images of scenes;
a control unit (106) for generating information of a current viewing area of one of the images of scenes according to the FOV of the user A as displayed on the first display unit (104); whereby the images of scenes are greater than the current viewing area; and
a first communication unit (102) for transmitting the generated information of the current viewing area to a guiding device (20) of a user B,
the guiding device (20) comprising:
a storage unit (208) for storing the same images of scenes;
a second communication unit (202) for receiving the generated information of the current viewing area of one of the images of scenes according to the FOV of the user A from the portable display device (10);
a second display unit (204) for displaying, for the user B, one of the images of scenes according to the FOV of the user A as a first viewing area, wherein the first viewing area is greater than the current viewing area of one of the images of scenes according to the FOV of the user A as displayed on the first display unit (104);
a processing unit (206) for creating a highlight indicator (402), wherein the highlight indicator (402) represents the current viewing area of the user A;
wherein the processing unit (206) is configured for generating guidance information associated with a guidance task according to the generated information of the current viewing area;
wherein the second communication unit (202) is configured to transmit the guidance information to the first communication unit (102), and accordingly the control unit (106) performs the guidance task according to the guidance information.

2. The electronic system of claim 1, wherein the guidance information comprises a command associated with the guidance task.

3. The electronic system of claim 1 or 2, wherein the portable display device further comprises:
a camera unit (112) for capturing auxiliary images associated with the environment of the portable display device;
wherein the first communication unit (102) transmits the auxiliary images to the second communication unit (202) and accordingly the processing unit (206) generates the guidance information according to the information of the current viewing area and the auxiliary images.

4. The electronic system according to any one of the preceding claims, wherein the processing unit (206) is further configured to add an object on the first image, so as to generate an edited image to be displayed on a second display unit (204) of the guiding device.

5. A portable display device (10) of user A for interacting with a guiding device (20) of a user B according to claim 8 in an electronic system according to claim 1,
comprising
a storage unit (110) for storing images of scenes; a first display unit (104) for displaying images of scenes according to a field of view, FOV, of a user A;
a control unit (106) for generating information of a current viewing area of one of the images of scenes according to the FOV of the user A as displayed by the first display unit (104) whereby the images of scenes are greater than the current viewing area; and a communication unit (102) for transmitting the generated information of the current viewing area to the guiding device (20), and wherein the communication unit (102) receives the guidance information associated with a guidance task from the guiding device (20), and accordingly the control unit (106) performs the guidance task according to the guidance information.

6. The portable display device of claim 5, wherein the guidance information comprises a command associated with the guidance task.

7. The portable display device according to any one of claims 5 to 6, further comprising:
a camera unit (112) for capturing auxiliary images associated with the environment of the portable display device;
wherein the communication unit (102) transmits the auxiliary images to the guiding device.

8. A guiding device (20) of a user B for interacting with a portable display device (10) of a user A according to claim 5 in an electronic system according to claim 1, comprising:
a communication unit (202) for receiving information of a current viewing area of one of the images of scenes according to a FOV of a user A as displayed by the portable display device (10) of the user A;
a storage unit (208) for storing the same images of scenes; and
a second display unit (204) for displaying, for a user B, one of the images of scenes according to the FOV of the user A as a first viewing area, wherein the first viewing area is greater than the current viewing area of one of the images of scenes according to the FOV of the user A displayed on the first display unit (104);
a processing unit (206) for creating a highlight indicator (402), wherein the highlight indicator (402) is the same as the current viewing area of the user A; wherein the processing unit (206) is configured for generating guidance information associated with a guidance task according to the information of the generated current viewing area;
wherein the communication unit (202) transmits the guidance information to the portable display device (10) for guiding the portable display device (10) to perform the guidance task.

9. The guiding device of claim 8, wherein the guidance information comprises a command associated with the guidance task.

10. The guiding device according to any one of claims 8 to 10, wherein the communication unit (202) receives auxiliary images associated with the environment of the portable display device from the portable display device, and accordingly the processing unit (206) generates the guidance information according to the information of the current viewing area and the auxiliary images.

## Patentansprüche

1. Ein elektronisches System, beinhaltend:
eine tragbare Anzeigevorrichtung (10) eines Benutzers A, beinhaltend:
eine erste Anzeigeeinheit (104) zum Anzeigen von Bildern von Szenen gemäß einem Sichtfeld, FOV, des Benutzers A;
eine Speichereinheit (110) zum Speichern der Bilder von Szenen;
eine Steuereinheit (106) zum Erzeugen von Informationen eines aktuellen Sichtbereichs eines der Bilder von Szenen gemäß dem FOV des Benutzers A, wie auf der ersten Anzeigeeinheit (104) angezeigt, wodurch die Bilder von Szenen größer als der aktuelle Sichtbereich sind; und
eine erste Kommunikationseinheit (102) zum Übertragen der erzeugten Informationen des aktuellen Sichtbereichs an eine Führungsvorrichtung (20) eines Benutzers B,
wobei die Führungsvorrichtung (20) Folgendes beinhaltet:
eine Speichereinheit (208) zum Speichern der gleichen Bilder von Szenen;
eine zweite Kommunikationseinheit (202) zum Empfangen der erzeugten Informationen des aktuellen Sichtbereichs eines der Bilder von Szenen gemäß dem FOV des Benutzers A von der tragbaren Anzeigevorrichtung (10);
eine zweite Anzeigeeinheit (204) zum Anzeigen, für den Benutzer B, eines der Bilder von Szenen gemäß dem FOV des Benutzers A als einen ersten Sichtbereich, wobei der erste Sichtbereich größer als der aktuelle Sichtbereich eines der Bilder von Szenen gemäß dem FOV des Benutzers A, wie auf der ersten Anzeigeeinheit (104) angezeigt, ist;
eine Verarbeitungseinheit (206) zum Schaffen eines Highlightindikators (402), wobei der Highlightindikator (402) den aktuellen Sichtbereich des Benutzers A darstellt;
wobei die Verarbeitungseinheit (206) zum Erzeugen von Führungsinformationen, zugehörig zu einer Führungsaufgabe, gemäß den erzeugten Informationen des aktuellen Sichtbereichs konfiguriert ist;
wobei die zweite Kommunikationseinheit (202) konfiguriert ist, um die Führungsinformationen an die erste Kommunikationseinheit (102) zu übertragen und dementsprechend die Steuereinheit (106) die Führungsaufgabe gemäß den Führungsinformationen durchführt.

2. Elektronisches System gemäß Anspruch 1, wobei die Führungsinformationen einen Befehl, zugehörig zu der Führungsaufgabe, beinhalten.

3. Elektronisches System gemäß Anspruch 1 oder 2, wobei die tragbare Anzeigevorrichtung ferner Folgendes beinhaltet:
eine Kameraeinheit (112) zum Erfassen von Hilfsbildern, zugehörig zu der Umgebung der tragbaren Anzeigevorrichtung;
wobei die erste Kommunikationseinheit (102) die Hilfsbilder an die zweite Kommunikationseinheit (202) überträgt und dementsprechend die Verarbeitungseinheit (206) die Führungsinformationen gemäß den Informationen des aktuellen Sichtbereichs und der Hilfsbilder erzeugt.

4. Elektronisches System gemäß einem der vorhergehenden Ansprüche, wobei die Verarbeitungseinheit (206) ferner konfiguriert ist, um ein Objekt auf dem ersten Bild hinzuzufügen, um ein bearbeitetes Bild zu erzeugen, das auf einer zweiten Anzeigeeinheit (204) der Führungsvorrichtung angezeigt werden soll.

5. Eine tragbare Anzeigevorrichtung (10) des Benutzers A zum Interagieren mit einer Führungsvorrichtung (20) eines Benutzers B gemäß Anspruch 8 in einem elektronischen System gemäß Anspruch 1, beinhaltend:
eine Speichereinheit (110) zum Speichern von Bildern von Szenen;
eine erste Anzeigeeinheit (104) zum Anzeigen von Bildern von Szenen gemäß einem Sichtfeld, FOV, eines Benutzers A;
eine Steuereinheit (106) zum Erzeugen von Informationen eines aktuellen Sichtbereichs eines der Bilder von Szenen gemäß dem FOV des Benutzers A, wie durch die erste Anzeigeeinheit (104) angezeigt, wodurch die Bilder von Szenen größer als der aktuelle Sichtbereich sind; und
eine Kommunikationseinheit (102) zum Übertragen der erzeugten Informationen des aktuellen Sichtbereichs an die Führungsvorrichtung (20), und wobei die Kommunikationseinheit (102) die Führungsinformationen, zugehörig zu einer Führungsaufgabe von der Führungsvorrichtung (20), empfängt und dementsprechend die Steuereinheit (106) die Führungsaufgabe gemäß den Führungsinformationen durchführt.

6. Tragbare Anzeigevorrichtung gemäß Anspruch 5, wobei die Führungsinformationen einen Befehl, zugehörig zu der Führungsaufgabe, beinhalten.

7. Tragbare Anzeigevorrichtung gemäß einem der Ansprüche 5 bis 6, die ferner Folgendes beinhaltet:
eine Kameraeinheit (112) zum Erfassen von Hilfsbildern, zugehörig zu der Umgebung der tragbaren Anzeigevorrichtung;
wobei die Kommunikationseinheit (102) die Hilfsbilder an die Führungsvorrichtung überträgt.

8. Eine Führungsvorrichtung (20) eines Benutzers B zum Interagieren mit einer tragbaren Anzeigevorrichtung (10) eines Benutzers A gemäß Anspruch 5 in einem elektronischen System gemäß Anspruch 1, beinhaltend:
eine Kommunikationseinheit (202) zum Empfangen von Informationen eines aktuellen Sichtbereichs eines der Bilder von Szenen gemäß einem FOV eines Benutzers A, wie durch die tragbare Anzeigevorrichtung (10) des Benutzers A angezeigt;
eine Speichereinheit (208) zum Speichern der gleichen Bilder von Szenen; und
eine zweite Anzeigeeinheit (204) zum Anzeigen, für einen Benutzer B, eines der Bilder von Szenen gemäß dem FOV des Benutzers A als einen ersten Sichtbereich, wobei der erste Sichtbereich größer als der aktuelle Sichtbereich eines der Bilder von Szenen gemäß dem FOV des Benutzers A ist, der auf der ersten Anzeigeeinheit (104) angezeigt wird;
eine Verarbeitungseinheit (206) zum Schaffen eines Highlightindikators (402), wobei der Highlightindikator (402) der gleiche wie der aktuelle Sichtbereich des Benutzers A ist;
wobei die Verarbeitungseinheit (206) zum Erzeugen von Führungsinformationen, zugehörig zu einer Führungsaufgabe, gemäß den Informationen des erzeugten aktuellen Sichtbereichs, konfiguriert ist;
wobei die Kommunikationseinheit (202) die Führungsinformationen an die tragbare Anzeigevorrichtung (10) überträgt, um die tragbare Anzeigevorrichtung (10) derart zu führen, dass diese die Führungsaufgabe durchführt.

9. Führungsvorrichtung gemäß Anspruch 8, wobei die Führungsinformationen einen Befehl, zugehörig zu der Führungsaufgabe, beinhalten.

10. Führungsvorrichtung gemäß einem der Ansprüche 8 bis 10, wobei die Kommunikationseinheit (202) Hilfsbilder, zugehörig zu der Umgebung der tragbaren Anzeigevorrichtung, von der tragbaren Anzeigevorrichtung empfängt und dementsprechend die Verarbeitungseinheit (206) die Führungsinformationen gemäß den Informationen des aktuellen Sichtbereichs und der Hilfsbilder erzeugt.

## Revendications

1. Un système électronique, comprenant :
un dispositif d'affichage portable (10) d'un utilisateur A, comprenant :
une première unité d'affichage (104) pour afficher des images de scènes selon un champ de vision, FOV, de l'utilisateur A ;
une unité de stockage (110) pour stocker les images de scènes ;
une unité de commande (106) pour générer des informations d'une zone de visualisation actuelle de l'une des images de scènes selon le FOV de l'utilisateur A telle qu'elle est affichée sur la première unité d'affichage (104) ; les images de scènes étant plus grandes que la zone de visualisation actuelle ; et
une première unité de communication (102) pour transmettre les informations générées de la zone de visualisation actuelle à un dispositif de guidage (20) d'un utilisateur B,
le dispositif de guidage (20) comprenant :
une unité de stockage (208) pour stocker les mêmes images de scènes ;
une deuxième unité de communication (202) pour recevoir les informations générées de la zone de visualisation actuelle de l'une des images de scènes selon le FOV de l'utilisateur A en provenance du dispositif d'affichage portable (10) ;
une deuxième unité d'affichage (204) pour afficher, pour l'utilisateur B, l'une des images de scènes selon le FOV de l'utilisateur A sous la forme d'une première zone de visualisation, la première zone de visualisation étant plus grande que la zone de visualisation actuelle de l'une des images de scènes selon le FOV de l'utilisateur A telle qu'elle est affichée sur la première unité d'affichage (104) ;
une unité de traitement (206) pour créer un indicateur en surbrillance (402), l'indicateur en surbrillance (402) représentant la zone de visualisation actuelle de l'utilisateur A ;
dans lequel l'unité de traitement (206) est configurée pour générer des informations de guidage associées à une tâche de guidage selon les informations générées de la zone de visualisation actuelle ;
dans lequel la deuxième unité de communication (202) est configurée pour transmettre les informations de guidage à la première unité de communication (102), et en conséquence l'unité de commande (106) effectue la tâche de guidage selon les informations de guidage.

2. Le système électronique de la revendication 1, dans lequel les informations de guidage comprennent une instruction associée à la tâche de guidage.

3. Le système électronique de la revendication 1 ou de la revendication 2, dans lequel le dispositif d'affichage portable comprend en outre :
une unité caméra (112) pour capturer des images auxiliaires associées à l'environnement du dispositif d'affichage portable ;
dans lequel la première unité de communication (102) transmet les images auxiliaires à la deuxième unité de communication (202) et en conséquence l'unité de traitement (206) génère les informations de guidage selon les informations de la zone de visualisation actuelle et les images auxiliaires.

4. Le système électronique selon l'une quelconque des revendications précédentes, dans lequel l'unité de traitement (206) est en outre configurée pour ajouter un objet sur la première image, de manière à générer une image éditée à afficher sur une deuxième unité d'affichage (204) du dispositif de guidage.

5. Un dispositif d'affichage portable (10) d'utilisateur A pour interagir avec un dispositif de guidage (20) d'un utilisateur B selon la revendication 8 dans un système électronique selon la revendication 1, comprenant
une unité de stockage (110) pour stocker des images de scènes ;
une première unité d'affichage (104) pour afficher des images de scènes selon un champ de vision, FOV, d'un utilisateur A ;
une unité de commande (106) pour générer des informations d'une zone de visualisation actuelle de l'une des images de scènes selon le FOV de l'utilisateur A telle qu'elle est affichée par la première unité d'affichage (104), les images de scènes étant plus grandes que la zone de visualisation actuelle ; et
une unité de communication (102) pour transmettre les informations générées de la zone de visualisation actuelle au dispositif de guidage (20), et dans lequel l'unité de communication (102) reçoit les informations de guidage associées à une tâche de guidage en provenance du dispositif de guidage (20), et en conséquence l'unité de commande (106) effectue la tâche de guidage selon les informations de guidage.

6. Le dispositif d'affichage portable de la revendication 5, dans lequel les informations de guidage comprennent une instruction associée à la tâche de guidage.

7. Le dispositif d'affichage portable selon l'une quelconque des revendications 5 à 6, comprenant en outre :
une unité caméra (112) pour capturer des images auxiliaires associées à l'environnement du dispositif d'affichage portable ;
dans lequel l'unité de communication (102) transmet les images auxiliaires au dispositif de guidage.

8. Un dispositif de guidage (20) d'un utilisateur B pour interagir avec un dispositif d'affichage portable (10) d'un utilisateur A selon la revendication 5 dans un système électronique selon la revendication 1, comprenant :
une unité de communication (202) pour recevoir des informations d'une zone de visualisation actuelle de l'une des images de scènes selon un FOV d'un utilisateur A telle qu'elle est affichée par le dispositif d'affichage portable (10) de l'utilisateur A ;
une unité de stockage (208) pour stocker les mêmes images de scènes ; et
une deuxième unité d'affichage (204) pour afficher, pour un utilisateur B, l'une des images de scènes selon le FOV de l'utilisateur A sous la forme d'une première zone de visualisation, la première zone de visualisation étant plus grande que la zone de visualisation actuelle de l'une des images de scènes selon le FOV de l'utilisateur A affichée sur la première unité d'affichage (104) ;
une unité de traitement (206) pour créer un indicateur en surbrillance (402), l'indicateur en surbrillance (402) étant le même que la zone de visualisation actuelle de l'utilisateur A ;
dans lequel l'unité de traitement (206) est configurée pour générer des informations de guidage associées à une tâche de guidage selon les informations de la zone de visualisation actuelle générée ;
dans lequel l'unité de communication (202) transmet les informations de guidage au dispositif d'affichage portable (10) pour guider le dispositif d'affichage portable (10) afin d'effectuer la tâche de guidage.

9. Le dispositif de guidage de la revendication 8, dans lequel les informations de guidage comprennent une instruction associée à la tâche de guidage.

10. Le dispositif de guidage selon l'une quelconque des revendications 8 à 10, dans lequel l'unité de communication (202) reçoit des images auxiliaires associées à l'environnement du dispositif d'affichage portable en provenance du dispositif d'affichage portable, et en conséquence l'unité de traitement (206) génère les informations de guidage selon les informations de la zone de visualisation actuelle et les images auxiliaires.
